(19) Europäisches Patentamt

European Patent Office

Office européen des brevets

(11) **EP 1 017 042 B1**

(12) **EUROPEAN PATENT SPECIFICATION**

(45) Date of publication and mention
of the grant of the patent:
**03.11.2004 Bulletin 2004/45**

(51) Int Cl.⁷: **G10L 21/02**

(21) Application number: **00101229.3**

(22) Date of filing: **18.01.1995**

(54) **Voice activity detection driven noise remediator**

Durch Sprachaktivitätsdetektion gesteuerte Rauschunterdrückung

Suppression de bruit contrôlée par détection d'activité vocale

(84) Designated Contracting States:
**DE FR GB IT SE**

(30) Priority: **28.01.1994 US 188294**

(43) Date of publication of application:
**05.07.2000 Bulletin 2000/27**

(62) Document number(s) of the earlier application(s) in
accordance with Art. 76 EPC:
**95300289.6 / 0 665 530**

(73) Proprietor: **AT&T Corp.**
**New York, NY 10013-2412 (US)**

(72) Inventors:
• **Janiszewski, Thomas John**
**Andover, Sussex, NJ 07821 (US)**
• **Recchione, Michael Charles**
**Nutley, New Jersey 07110 (US)**

(74) Representative:
**Buckley, Christopher Simon Thirsk et al**
**Lucent Technologies (UK) Ltd,**
**5 Mornington Road**
**Woodford Green, Essex IG8 0TU (GB)**

(56) References cited:
**EP-A- 0 348 078**      **WO-A-87/00366**
**WO-A-93/20669**      **US-A- 4 061 875**

EP 1 017 042 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

A cellular telephone system comprises three essential elements: a cellular switching system that serves as the gateway to the landline (wired) telephone network, a number of base stations under the switching system's control that contain equipment that translates between the signals used in the wired telephone network and the radio signals used for wireless communications, and a number of mobile telephone units that translate between the radio signals used to communicate with the base stations and the audible acoustic signals used to communicate with human users (e.g. speech, music, etc.).

Communication between a base station and a mobile telephone is possible only if both the base station and the mobile telephone use identical radio modulation schemes, data-encoding conventions, and control strategies, i.e. both units must conform to an air-interface specification. A number of standards have been established for air-interfaces in the United States. Until recently, all cellular telephony in the United States has operated according to the Advanced Mobile Phone Service (AMPS) standard. This standard specifies analog signal encoding using frequency modulation in the 800 MHz region of the radio spectrum. Under this scheme, each cellular telephone conversation is assigned a communications channel consisting of two 30 KHz segments of this region for the duration of the call. In order to avoid interference between conversations, no two conversations may occupy the same channel simultaneously within the same geographic area. Since the entire portion of the radio spectrum allocated to cellular telephony is finite, this restriction places a limit on the number of simultaneous users of a cellular telephone system.

In order to increase the capacity of the system, a number of alternatives to the AMPS standard have been introduced. One of these is the Interim Standard-54 (IS-54), issued by the Electronic Industries Association and the Telecommunications Industry Association. This standard makes use of digital signal encoding and modulation using a time division multiple access (TDMA) scheme. Under the TDMA scheme, each 30 KHz segment is shared by three simultaneous conversations, and each conversation is permitted to use the channel one-third of the time. Time is divided into 20ms frames, and each frame is further sub-divided into three time slots. Each conversation is allotted one time slot per frame.

To permit all of the information describing 20ms of conversation to be conveyed in a single time slot, speech and other audio signals are processed using a digital speech compression method known as Vector Sum Excited Linear Prediction (VSELP). Each IS-54 compliant base station and mobile telephone unit contains a VSELP encoder and decoder. Instead of transmitting a digital representation of the audio waveform over the channel, the VSELP encoder makes use of a model of human speech production to reduce the digitized audio signal to a set of parameters that represent the state of the speech production mechanism during the frame (e.g. the pitch, the vocal tract configuration, etc.). These parameters are encoded as a digital bit-stream, and are then transmitted over the channel to the receiver at 8 kilobits per second (kbs). This is a much lower bit rate than would be required to encode the actual audio waveform. The VSELP decoder at the receiver then uses these parameters to recreate an estimate of the digitized audio waveform. The transmitted digital speech data is organized into digital information frames of 20ms, each containing 160 samples. There are 159 bits per speech frame. The VSELP method is described in detail in the document, TR45 Full-Rate Speech Codec Compatibility Standard PN-2972, 1990, published by the Electronics Industries Association (hereinafter referred to as "VSELP Standard").

VSELP significantly reduces the number of bits required to transmit audio information over the communications channel. However, it achieves this reduction by relying heavily on a model of speech production. Consequently, it renders non-speech sounds poorly. For example, the interior of a moving automobile is an inherently noisy environment. The automobile's own sounds combine with external noises to create an acoustic background noise level much higher than is typically encountered in non-mobile environments. This situation forces VSELP to attempt to encode non-speech information much of the time, as well as combinations of speech and background noise.

Two problems arise when VSELP is used to encode speech in the presence of background noise. First, the background noise sounds unnatural whether or not there is speech present, and second, the speech is distorted in a characteristic way. Individually and collectively these problems are commonly referred to as "swirl".

While it would be possible to eliminate these artifacts introduced by the encoding/decoding process by replacing the VSELP algorithm with another speech compression algorithm that does not suffer from the same deficiencies, this strategy would require changing the IS-54 Air Interface Specification. Such a change is undesirable because of the considerable investment in existing equipment on the part of cellular telephone service providers, manufacturers and subscribers. For example, in one prior art technique, the speech encoder detects when no speech is present and encodes a special frame to be transmitted to the receiver. This special frame contains comfort noise parameters which indicate that the speech decoder is to generate comfort noise which is similar to the background noise on the transmit side. These special frames are transmitted periodically by the transmitter during periods of non-speech. This proposed solution to the swirl problem requires a change to the current VSELP speech algorithm because it introduces special encoded frames to indicate when comfort noise is to be generated. It is implemented at both the transmit and receive sides of the communication channel, and requires a change in the current air interface specification standard. It is therefore an undesirable solution.

GB-A-2 256 351 discloses a communication transceiver for communicating in frames of encoded audio, comprising a transmitter and receiver, a speech encoder and decoder, a voice activity detector, and comfort noise generation and insertion during periods of speech silence.

WO-A-93 20669 relates to an audio processing device with circuitry to suppress noise. The device includes a microphone that converts ambient sound energy into an input signal A, which is processed by a variable high pass filtering circuit. A signal B, which is split from the input signal A, is processed by a noise detecting circuit inclusive of a low pass filtering circuit and a level detector. An output signal C from the noise detecting circuit controls the variable high pass filtering circuit to attenuate a range of low frequencies of the input signal A proportional to the detected level of noise.

## Summary of the Invention

A method and apparatus according to the invention are as set out in the independent claims. Preferred forms are set out in the dependent claims.

An advantage of the present invention is that it may reduce the severity of the artifacts introduced by VSELP (or any other speech coding/decoding algorithm) when used in the presence of acoustic background noise, without requiring any changes to the air interface specification.

It has been determined that a combination of signal attenuation with comfort noise insertion during periods of non-speech, and selective high pass filtering based on an estimate of the background noise energy is an effective solution to the swirl problem discussed above.

In an embodiment of the invention, a voice activity detector uses an energy estimate to detect the presence of speech in the received speech signal in a noise environment. When no speech is present, the system attenuates the signal and inserts low-pass filtered white noise (i.e. comfort noise) at an appropriate level. This comfort noise mimics the typical spectral characteristics of automobile or other background noise. This smoothes out the swirl making it sound natural. When speech is determined to be present in the signal by the voice activity detector, the synthesized speech signal is processed with no attenuation.

It has been determined that the perceptually annoying artifacts that the speech encoder introduces when trying to encode both speech and noise occur mostly in the lower frequency range. Therefore, in addition to the voice activity driven attenuation and comfort noise insertion, a set of high pass filters are used depending on the background noise level. This filtering is applied to the speech signal regardless of whether speech is present or not. If the noise level is found to be less than -52db, no high pass filtering is used. If the noise level is between -40db and -52db, a high pass filter with a cutoff frequency of 200 Hz is applied to the synthesized speech signal. If the noise level is greater than -40db, a high pass filter with a cutoff frequency of 350 Hz is applied. The result of these high pass filters is reduced background noise with little affect on the speech quality.

The invention described herein is employed at the receiver (either at the base station, the mobile unit, or both) and thus it may be implemented without the necessity of a change to the current standard speech encoding/decoding protocol.

## Brief Description of the Drawings

Fig. 1 is a block diagram of a digital radio receiving system incorporating the present invention.
Fig. 2 is a block diagram of a voice activity detection driven noise remediator embodying the present invention.
Fig. 3 is a waveform depicting the total acoustic energy of a received signal.
Fig. 4 is a block diagram of a high pass filter driver.
Fig. 5 is a flow diagram of the functioning of the voice activity detector.
Fig. 6 shows a block diagram of a microprocessor embodiment of the present invention.

## Detailed Description

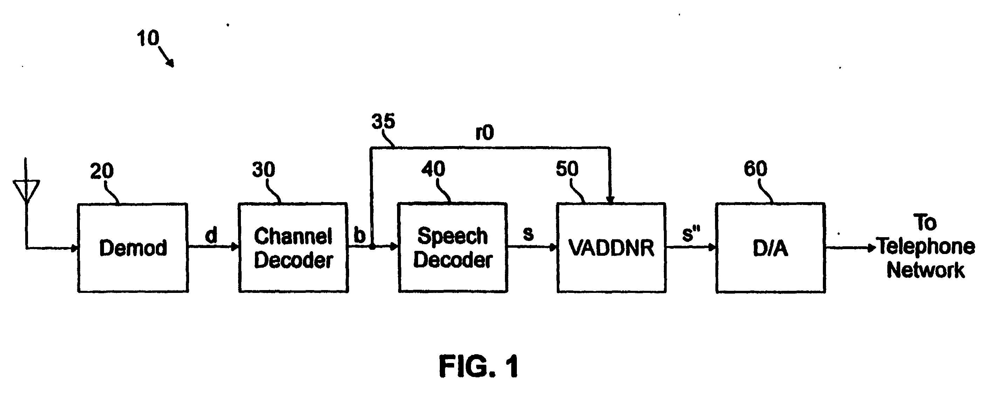

A digital radio receiving system 10 incorporating the present invention is shown in Fig. 1. A demodulator 20 receives transmitted waveforms corresponding to encoded speech signals and processes the received waveforms to produce a digital signal d. This digital signal d is provided to a channel decoder 30 which processes the signal d to mitigate channel errors. The resulting signal generated by the channel decoder 30 is an encoded speech bit stream b organized into digital information frames in accordance with the VSELP standard discussed above in the background of the invention. This encoded speech bit stream b is provided to a speech decoder 40 which processes the encoded speech bit stream b to produce a decoded speech bit stream s. This speech decoder 40 is configured to decode speech which has been encoded in accordance with the VSELP technique. This decoded speech bit stream s is provided to a voice activity detection driven noise remediator (VADDNR) 50 to remove any background "swirl" present in the signal during periods of non-speech. In one embodiment, the VADDNR 50 also receives a portion of the encoded speech bit stream b from the channel decoder 30 over signal line 35. The VADDNR 50 uses the VSELP coded frame energy value r0 which is part of the encoded bit stream b, as discussed in more detail below. The VADDNR 50 generates a processed decoded speech bit stream output s''. The output from the VADDNR 50 may then be provided to a digital to analog converter 60 which converts the digital signal s'' to an analog waveform. This analog waveform may then be sent to a destination system, such as a telephone network. Alternatively, the output from the VADDNR 50 may be provided to another device that converts the VADDNR output to some other digital data format used by a destination system.

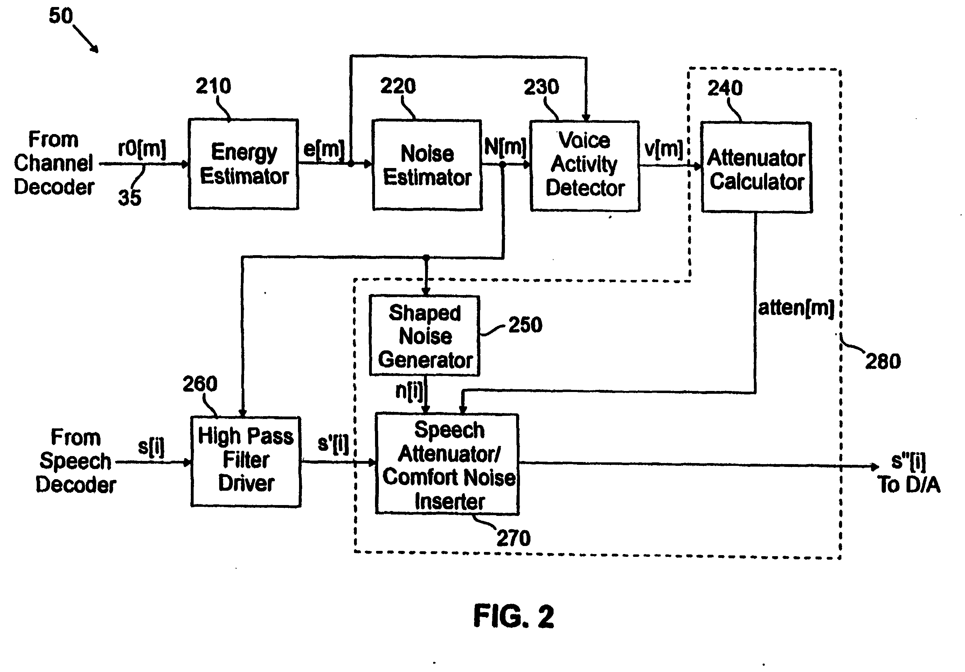

The VADDNR 50 is shown in greater detail in Fig. 2. The VADDNR receives the VSELP coded frame energy value r0 from the encoded speech bit stream b over signal line 35 as shown in Fig. 1. This energy value r0 represents the average signal power in the input speech over the 20ms frame interval. There are 32 possible values for r0, 0 through 31. r0=0 represents a frame energy of 0. The remaining values for r0 range from a minimum of -64db, corresponding to r0=1, to a maximum of -4db, corresponding to r0=31. The step size between r0 values is 2db. The frame energy value r0 is described in more detail in VSELP Standard, p. 16. The coded frame energy value r0 is provided to an energy estimator 210 which determines the average frame energy.

The energy estimator 210 generates an average frame energy signal e[m] which represents the average frame energy computed during a frame m, where m is a frame index which represents the current digital information frame. e[m] is defined as:

$$
e[m] = \begin{cases} Einit & \text{for } m = 0 \\ \alpha * r0[m] + (1-\alpha) * e[m-1] & \text{for } m > 0 \end{cases}
$$

The average frame energy is initially set to an initial energy estimate Einit. Einit is set to a value greater than 31, which is the largest possible value for r0. For example, Einit could be set to a value of 32. After initialization, the average frame energy e[m] will be calculated by the equation e[m] = $\alpha$ * r0[m] + (1-$\alpha$) * e[m-1], where $\alpha$ is a smoothing constant with $0 \leq \alpha \leq 1$. $\alpha$ should be chosen to provide acceptable frame averaging. We have found that a value of $\alpha = 0.25$ to be optimal, giving effective frame averaging over seven frames of digital information (140 ms). Different values of $\alpha$ could be chosen, with the value preferably being in the range of $0.25 \pm 0.2$.

As discussed above, and as shown in Fig. 1, the VADDNR 50 receives the VSELP coded frame energy value r0 from the encoded speech bit stream signal b prior to the signal b being decoded by the speech decoder 40. Alternatively, this frame energy value r0 could be calculated by the VADDNR 50 itself from the decoded speech bit stream signal s received from the speech decoder 40. In an embodiment where the frame energy value r0 is calculated by the VADDNR 50, there is no need to provide any part of the encoded speech bit stream b to the VADDNR 50, and signal line 35 shown in Fig. 1 would not be present. Instead, the VADDNR 50 would process only the decoded speech bit stream s, and the frame energy value r0 would be calculated as described in VSELP Standard, pp. 16 - 17. However, by providing r0 to the VADDNR 50 from the encoded bit stream b over signal line 35, the VADDNR can process the decoded speech bit stream s more quickly because it does not have to calculate r0.

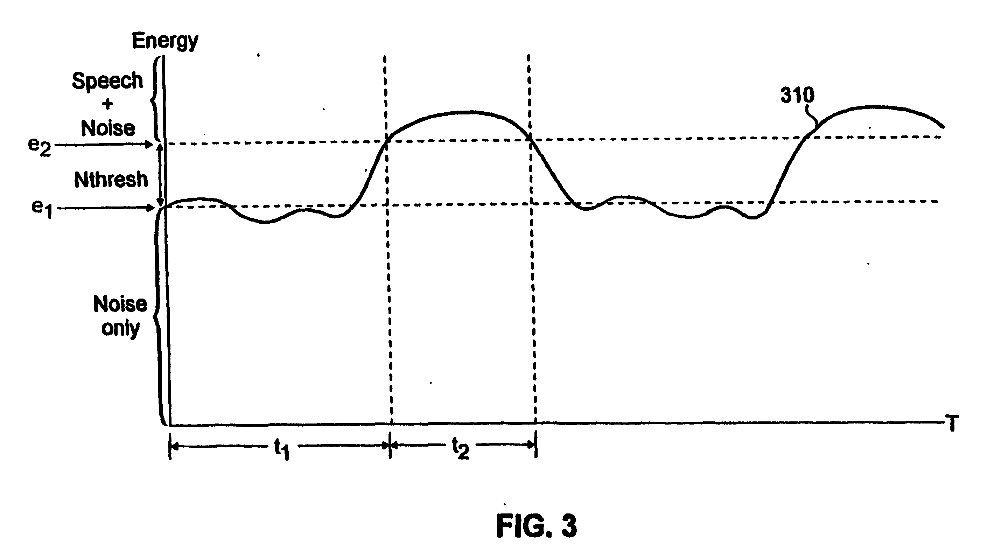

The average frame energy signal e[m] produced by the energy estimator 210 represents the average total acoustic energy present in the received speech signal. This total acoustic energy may be comprised of both speech and noise. As an example, Fig. 3 shows a waveform depicting the total acoustic energy of a typical received signal 310 over time T. In a mobile environment, there will typically be a certain level of ambient background noise. The energy level of this noise is shown in Fig. 3 as $e_1$. When speech is present in the signal 310, the acoustic energy level will represent both speech and noise. This is shown in Fig. 3 in the range where energy > $e_2$. During time interval $t_1$ speech is not present in the signal 310 and the acoustic energy during this time interval $t_1$ represents ambient background noise only. During time interval $t_2$, speech is present in the signal 310 and the acoustic energy during this time interval $t_2$ represents ambient background noise plus speech.

Referring to Fig. 2, the output signal e[m] produced by the energy estimator 210 is provided to a noise estimator 220 which determines the average background noise level in the decoded speech bit stream s. The noise estimator 220 generates a signal N[m] which represents a noise estimate value, where:

$$N[m] = \begin{cases} Ninit & \text{for } m = 0 \\ N[m-1] & \text{for } e[m] > N[m-1] + Nthresh \\ \beta * e[m] + (1-\beta) * N[m-1] & \text{otherwise} \end{cases}$$

Initially, N[m] is set to the initial value Ninit, which is an initial noise estimate. During further processing, the value N[m] will increase or decrease based upon the actual background noise present in the decoded speech bit stream s. Ninit is set to a level which is on the boundary between moderate and severe background noise. Initializing N[m] to this level permits N[m] to adapt quickly in either direction as determined by the actual background noise. We have found that in a mobile environment it is preferable to set Ninit to an r0 value of 13.

The speech component of signal energy should not be included in calculating the average background noise level. For example, referring to Fig. 3, the energy level present in the signal 310 during time interval $t_1$ should be included in calculating the noise estimate N[m], but the energy level present in the signal 310 during time interval $t_2$ should not be included because the energy during time interval $t_2$ represents both background noise and speech.

Thus, any average frame energy e[m], received from the energy estimator 210 which represents both speech and noise should be excluded from the calculation of the noise estimate N[m] in order to prevent the noise estimate N[m] from becoming biased. In order to exclude average frame energy e[m] values which represent both speech and noise, an upper noise clipping threshold, Nthresh, is used. Thus, as stated above, if e[m] > N[m-1] + Nthresh then N[m] = N[m-1]. In other words, if the current frame's average frame energy, e[m], is greater than the prior frame's noise estimate, N[M-1], by an amount equal to or greater than Nthresh, i.e. speech is present, then N[m] is not changed from the previous frame's calculation. Thus, if there is a large increase of frame energy over a short time period, then it is assumed that this increase is due to the presence of speech and the energy is not included in the noise estimate. We have found it optimal to set Nthresh to the equivalent of a frame energy r0 value of 2.5. This limits the operational range of the noise estimate algorithm to conditions with better than 5db audio signal to noise ratio, since r0 is scaled in units of 2db. Nthresh could be set anywhere in the range of 2 to 4 for acceptable performance of the noise estimator 220.

If there is not a large increase of frame energy over a short time period, then the noise estimate is determined by the equation N[m] = $\beta$ * e[m] + (1-$\beta$) * N[m-1], where $\beta$ is a smoothing constant which should be set to provide acceptable frame averaging. A value of 0.05 for $\beta$, which gives frame averaging over 25 frames (500ms) has been found preferable. The value of P should generally be set in the range of $0.025 \leq \beta \leq 0.1$.

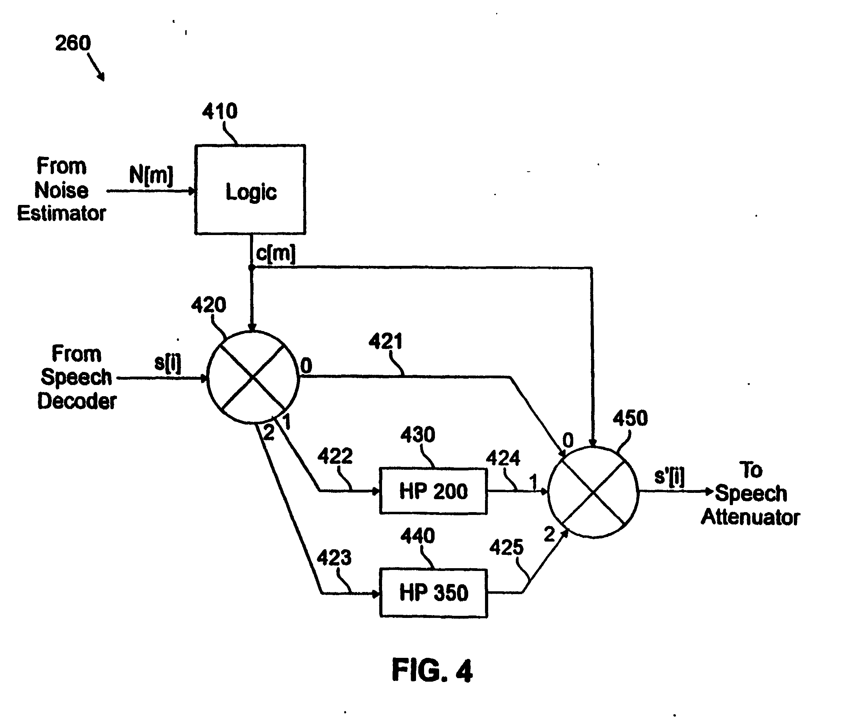

The noise estimate value N[m] calculated by the noise estimator 220 is provided to a high pass filter driver 260 which operates on the decoded bit stream signal s provided from the speech decoder 40. As discussed above, each digital information frame contains 160 samples of speech data. The high pass filter driver 260 operates on each of these samples s[i], where i is a sampling index. The high pass filter driver 260 is shown in further detail in Fig. 4. The noise estimate value N[m] generated by the noise estimator 220 is provided to logic block 410 which contains logic circuitry to determine which of a set of high pass filters will be used to filter each sample s[i] of the decoded speech bit stream s. There are two high pass filters 430 and 440. Filter 430 has a cutoff frequency at 200 Hz and filter 440 has a cutoff frequency at 350 Hz. These cutoff frequencies have been determined to provide optimal results, however other values may be used in accordance with the present invention. The difference in cutoff frequencies between the filters should preferably be at least 100 Hz. In order to determine which filter should be used, the logic block 410 of the high pass filter driver 260 compares the noise estimate value N[m] with two thresholds. The first threshold is set to a value corresponding to a frame energy value r0=7 (corresponding to -52db), and the second threshold is set to a value corresponding to a frame energy value r0=13 (corresponding to -40db). If the noise estimate N[m] is less than r0=7, then there is no high pass filtering applied. If the noise estimate value N[m] is greater than or equal to r0=7 and less than r0=13, then the 200 Hz high pass filter 430 is applied. If the noise estimate value N[m] is greater than or equal to r0=13, then the 350 Hz high pass filter 440 is applied. The logic for determining the high pass filtering to be applied can be summarized as:

$$\text{filter} = \begin{cases} \text{all pass} & \text{for } N[m] < 7 \\ \text{high pass at 200 Hz} & \text{for } 7 \le N[m] < 13 \\ \text{high pass at 350 Hz} & \text{for } N[m] \ge 13 \end{cases}$$

With reference to Fig. 4, this logic is carried out by logic block 410. Logic block 410 will determine which filter is to be applied based upon the above rules and will provide a control signal c[m] to two cross bar switches 420,450. A control signal corresponding to a value of 0 indicates that no high pass filtering should be applied. A control signal corresponding to a value of 1 indicates that the 200 Hz high pass filter should be applied. A control signal corresponding to a value of 2 indicates that the 350 Hz high pass filter should be applied.

The signal s[i] is provided to the cross bar switch 420 from the speech decoder 40. The cross bar switch 420 directs the signal s[i] to the appropriate signal line 421, 422, 423 to select the appropriate filtering. A control signal of 0 will direct signal s[i] to signal line 421. Signal line 421 will provide the signal s[i] to cross bar switch 450 with no filtering being applied. A control signal of 1 will direct signal s[i] to signal line 422, which is connected to high pass filter 430. After the signal s[i] is filtered by high pass filter 430, it is provided to cross bar switch 450 over signal line 424. A control signal of 2 will direct signal s[i] to signal line 423, which is connected to high pass filter 440. After the signal s[i] is filtered by high pass filter 440, it is provided to cross bar switch 450 over signal line 425. The control signal c[m] is also provided to the cross bar switch 450. Based upon the control signal c[m], cross bar switch 450 will provide one of the signals from signal line 421, 424, 425 to the speech attenuator 270. This signal produced by the high pass filter driver 260 is identified as s'[i]. Those skilled in the art will recognize that any number of high pass filters or a single high pass filter with a continuously adjustable cutoff frequency could be used in the high pass filter driver 260 to filter the decoded bit stream s. Use of a larger number of high pass filters or a single high pass filter with a continuously adjustable cutoff frequency would make the transitions between filter selections less noticeable.

Referring to Fig. 2, the signal s'[i] produced by the high pass filter driver 260 is provided to a speech attenuator/comfort noise inserter 270. The speech attenuator/comfort noise inserter 270 will process the signal s'[i] to produce the processed decoded speech bit stream output signal s''[i]. The speech attenuator/comfort noise inserter 270 also receives input signal n[i] from a shaped noise generator 250 and input signal atten[m] from an attenuator calculator 240. The functioning of the speech attenuator/comfort noise inserter 270 will be discussed in detail below, following a discussion of how its inputs n[i] and atten[m] are calculated.

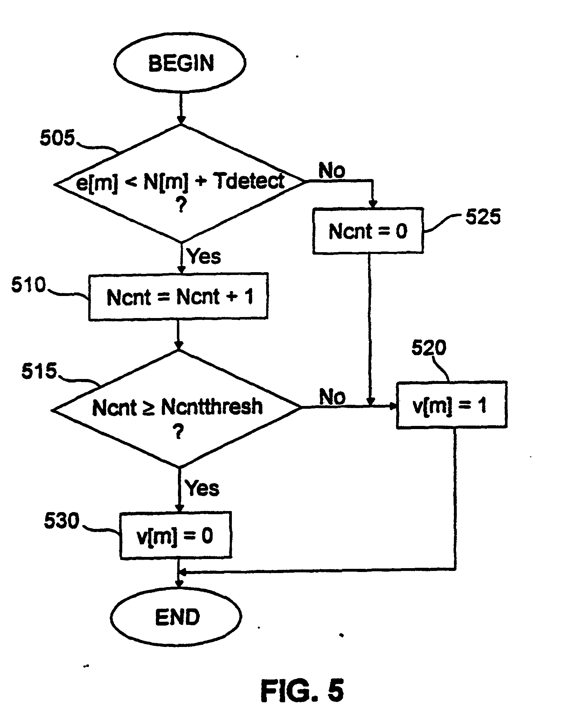

The noise estimate N[m] produced by the noise estimator 220, and the average frame energy e[m] produced by the energy estimator 210, are provided to the voice activity detector 230. The voice activity detector 230 determines whether or not speech is present in the current frame of the speech signal and produces a voice detection signal v[m] which indicates whether or not speech is present. A value of 0 for v[m] indicates that there is no voice activity detected in the current frame of the speech signal. A value of 1 for v[m] indicates that voice activity is detected in the current frame of the speech signal. The functioning of the voice activity detector 230 is described in conjunction with the flow diagram of Fig. 5. In step 505, the voice activity detector 230 will determine whether e[m] < N[m] + Tdetect, where Tdetect is a lower noise detection threshold, and is similar in function to the Nthresh value discussed above in conjunction with Fig. 3. The assumption is made that speech may only be present when the average frame energy e[m] is greater than the noise estimate value N[m] by some value, Tdetect. Tdetect is preferably set to an r0 value of 2.5 which means that speech may only be present if the average frame energy e[m] is greater than the noise estimate value N[m] by 5db. Other values may also be used. The value of Tdetect should generally be within the range 2.5 +/- 0.5.

In order to prevent the voice activity detector 230 from declaring no voice activity within words, an undetected frame counter Ncnt is used. Ncnt is initialized to zero and is set to count up to a threshold, Ncntthresh, which represents the number of frames containing no voice activity which must be present before the voice activity detector 230 declares that no voice activity is present. Ncntthresh may be set to a value of six. Thus, only if no speech is detected for six frames (120ms) will the voice activity detector 230 declare no voice. Returning now to Fig. 5, if step 505 determines that e[m] < N[m] + Tdetect, i.e. the average energy e[m] is less than that for which it has been determined that speech may be present, then Ncnt is incremented by one in step 510. If step 515 determines that Ncnt ≥ Ncntthresh, i.e., that there have been 6 frames in which no speech has been detected, then v[m] is set to 0 in step 530 to indicate no speech for the current frame. If step 515 determines that Ncnt < Ncntthresh, i.e. that there have not yet been 6 frames in which no speech has been detected, then v[m] is set to 1 in step 520 to indicate there is speech present in the current frame. If step 505 determines that e[m] ≥ N[m] + Tdetect, i.e. the average energy e[m] is greater than or equal to that for which it has been determined that speech may be present, then Ncnt is set to zero in step 525 and v[m] is set to one in step 520 to indicate that there is speech present in the current frame.

The voice detection signal v[m] produced by the voice activity detector 230 is provided to the attenuator calculator 240, which produces an attenuation signal, atten[m], which represents the amount of attenuation of the current frame. The attenuation signal atten[m] is updated every frame, and its value depends in part upon whether or not voice activity was detected by the voice activity detector 230. The signal atten[m] will represent some value between 0 and 1. The closer to 1, the less the attenuation of the signal, and the closer to 0, the more the attenuation of the signal. The maximum attenuation to be applied is defined as maxatten, and it has been determined that the optimal value for maxatten is .65 (i.e., -3.7db). Other values for maxatten may be used however, with the value generally being in the range 0.3 to 0.8. The factor by which the attenuation of the speech signal is increased is defined as attenrate, and the preferred value for attenrate has been found to be .98. Other values may be used for attenrate however, with the value generally in the range of 0.95 +/- .04.

In this section, we describe the calculation of the attenuation signal atten[m]. The use of atten[m] in attenuating the signal s'[i] will become clear during the discussion below in conjunction with the speech attenuator/comfort noise inserter 270. The attenuation signal atten[m] is calculated as follows. Initially, the attenuation signal atten[m] is set to 1. Following this initialization, atten[m] will be calculated based upon whether speech is present, as determined by the voice activity detector 230, and whether the attenuation has reached the maximum attenuation as defined by maxatten. If v[m] = 1, i.e. speech is detected, then atten[m] is set to 1. If v[m] =0, i.e. no speech is detected, and if the attenuation factor applied to the previous frame's attenuation (attenrate * atten[m-1]) is greater than the maximum attenuation, then the current frame attenuation is calculated by applying the attenuation factor to the previous frame's attenuation. If v[m] =0, i.e. no speech is detected, and if the attenuation factor applied to the previous frame's attenuation is less than or equal to the maximum attenuation, then the current frame attenuation is set to the maximum attenuation. This calculation of the current frame attenuation is summarized as:

$$
\texttt{atten[m]} = \begin{cases} \texttt{1.0} & \text{for } \texttt{m = 0 or v[m] = 1} \\[6pt] \texttt{attenrate * atten[m-1]} & \text{for } \texttt{attenrate * atten[m-1] >} \\ & \texttt{maxatten and v[m] = 0;} \\[6pt] \texttt{maxatten} & \text{for } \texttt{attenrate * atten[m-1]} \leq \\ & \texttt{maxatten and v[m] = 0} \end{cases}
$$

Thus, when no speech is detected by the voice activity detector 230, the attenuation signal atten[m] is reduced from 1 to .65(maxatten) by a constant factor .98. The current frame attenuation signal, atten[m], generated by the attenuation calculator 240 is provided to the speech attenuator/comfort noise inserter 270.

The speech attenuator/comfort noise inserter 270 also receives the signal n[i], which represents low-pass filtered white noise, from the shaped noise generator 250. This low pass filtered white noise is also referred to as comfort noise. The shaped noise generator 250 receives the noise estimate N[m] from the noise estimator 220 and generates the signal n[i] which represents the shaped noise as follows:

$$n[i] = \varepsilon * wn[i] + (1-\varepsilon) * n[i-1] \text{ where,}$$

$$wn[i] = \delta * dB2lin(N[m]) * ran[i]$$

where i is the sampling index as discussed above. Thus, n[i] is generated for each sample in the current frame. The function dB2lin maps the noise estimate N[m] from a dB to a linear value. The scale factor $\delta$ is set to a value of 1.7 and the filter coefficient $\varepsilon$ is set to a value of 0.1. The function ran[i] generates a random number between -1.0 and 1.0. Thus, the noise is scaled using the noise estimate N[m] and then filtered by a low pass filter. The above stated values for the scale factor $\delta$ and the filter coefficient $\varepsilon$ have been found to be optimal. Other values may be used however, with the value of $\delta$ generally in the range 1.5 to 2.0, and the value $\varepsilon$ generally in the range 0.05 to 0.15.

The low-pass filtered white noise n[i] generated by the shaped noise generator 220 and the current frame's attenuation atten[m] generated by the attenuator calculator 240 are provided to the speech attenuator/comfort noise inserter 270. The speech attenuator receives the high pass filtered signal s'[i] from the high pass filter driver 260 and generates the processed decoded speech bit stream s" according to the following equation:

$$s''[i] = atten[m] * s'[i] + (1-atten[m]) * n[i],$$

$$\text{for } i = 0,1,...,159$$

Thus, for each sample s'[i] in the high pass filtered speech signal s', the speech attenuator/comfort noise inserter 270 will attenuate the sample s'[i] by the current frame's attenuation atten[m]. At the same time, the speech attenuator/comfort noise inserter 270 will also insert the low pass filtered white noise n[i] based on the value of atten[m]. As can be seen from the above equation, if atten[m] = 1, then there will be no attenuation and s''[i] = s'[i]. If atten[m] = maxatten (.65) then s''[i] = (.65 * high pass filtered speech signal) + (.35 * low pass filtered white noise). The effect of the attenuation of the signal s'[i] plus the insertion of low pass filtered white noise (comfort noise) is to provide a smoother background noise with less perceived swirl. The signal s''[i] generated by the speech attenuator/comfort noise inserter 270 may be provided to the digital to analog converter 60, or to another device that converts the signal to some other digital data format, as discussed above.

As discussed above, the attenuator calculator 240, the shaped noise generator 250, and the speech attenuator/comfort noise inserter 270 operate in conjunction to reduce the background swirl when no speech is present in the received signal. These elements could be considered as a single noise remediator, which is shown in Fig. 2 within the dotted lines as 280. This noise remediator 280 receives the voice detection signal v[m] from the voice activity detector 230, the noise estimate N[m] from the noise estimator 220, and the high pass filtered signal s'[i] from the high pass filter driver 260, and generates the processed decoded speech bit stream s''[i] as discussed above.

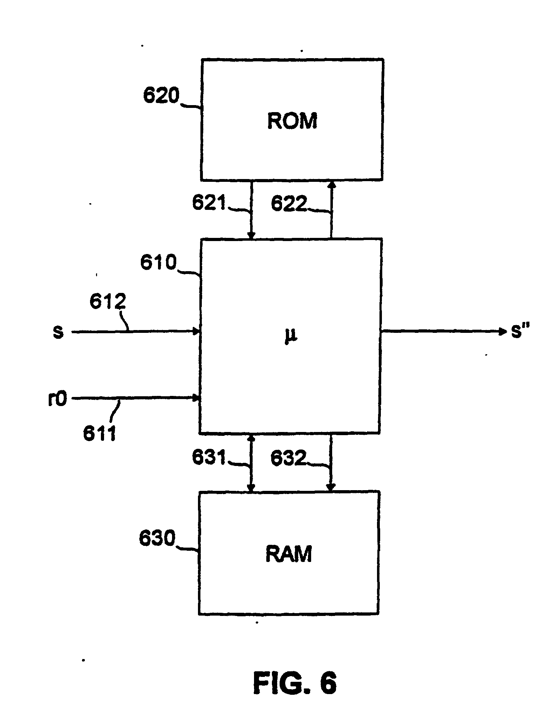

A suitable VADDNR 50 as described above could be implemented in a microprocessor as shown in Fig. 6. The microprocessor ($\mu$) 610 is connected to a non-volatile memory 620, such as a ROM, by a data line 621 and an address line 622. The non-volatile memory 620 contains program code to implement the functions of the VADDNR 50 as discussed above. The microprocessor 610 is also connected to a volatile memory 630, such as a RAM, by data line 631 and address line 632. The microprocessor 610 receives the decoded speech bit stream s from the speech decoder 40 on signal line 612, and generates a processed decoded speech bit stream s''. As discussed above, in one embodiment of the present invention, the VSELP coded frame energy value r0 is provided to the VADDNR 50 from the encoded speech bit stream b. This is shown in Fig. 6 by the signal line 611. In an alternate embodiment, the VADDNR calculates the frame energy value r0 from the decoded speech bit stream s, and signal line 611 would not be present.

It is to be understood that the embodiments and variations shown and described herein are illustrative of the invention and that various modifications may be implemented by those skilled in the art.

Throughout this description, various preferred values, and ranges of values, have been disclosed. However, it is to be understood that these values are related to the use of the present invention in a mobile environment. Those skilled in the art will recognize that the invention disclosed herein may be utilized in various environments, in which case values, and ranges of values, may vary from those discussed herein. The scope of the invention is thereby only limited by the appended claims.

## Claims

1. A method for processing a received signal representing speech and noise, said method comprising the steps of:

   generating an energy value representing the acoustic energy of said received signal, wherein said received signal does not contain special non-speech frames, special non-speech frames being defined as frames containing comfort noise parameters;
   based on this energy value, generating a noise estimate value representing the average background noise in said received signal;
   generating a high-pass filtered signal by applying said received signal to one of a plurality of high-pass filters based upon said noise estimate value;
   generating comfort noise based on said noise estimate value;
   determining whether said received signal contains a speech component based upon said energy value and said noise estimate value; and
   based on said high-pass filtering signal, generating a processed high pass filtered signal if said received signal does not contain a speech component.

2. A method as claimed in claim 1 wherein the difference in the cutoff frequencies of each of said plurality of high-pass filters is at least 100 Hz.

3. A method as claimed in claim 1 wherein said step of generating a processed high pass filtered signal comprises the steps of:

attenuating said high pass filtered signal; and
inserting said comfort noise into said high pass filtered signal.

4. A method as claimed in claim 3 wherein said comfort noise comprises low pass filtered white noise scaled based upon said noise estimate value.

5. Apparatus for processing a received signal, said received signal comprising a speech component and a noise component, said apparatus comprising:

means (210) for generating an energy value (e(m)) representing the acoustic energy of said received signal;
means (220) for generating based on this energy value, a noise estimate value (N(m)) representing the average background noise in said received signal; and
means (280) for generating a high pass filtered signal by applying said received signal to one of a plurality of high pass filters based upon said noise estimate value, wherein said energy value generating means and said high pass filter generating means are in said receiving apparatus.

6. Apparatus as claimed in claim 5 wherein the difference in the cutoff frequencies of each of said plurality of high pass filters is at least 100 Hz.

7. Apparatus as claimed in claim 5 comprising:

means for determining whether said received signal contains a speech component; and
means for generating a processed high pass filtered signal if said received signal does not contain a speech component.

8. Apparatus as claimed in claim 7 wherein said means for generating a processed high pass filtered signal comprises:

means (250) for generating comfort noise based on said noise estimate value;
means (270) for attenuating said high pass filtered signal; and
means (270) for inserting said comfort noise into said high pass filtered signal.

**Patentansprüche**

1. Verfahren zum Verarbeiten eines empfangenen Signals, das Sprache und Geräusche repräsentiert, wobei das Verfahren folgende Schritte umfasst:

Erzeugen eines Energiewertes, der die akustische Energie des empfangenen Signals repräsentiert, wobei das empfangene Signal keine speziellen sprachfreien Datenblöcke enthält, wobei sprachfreie Datenblöcke als Datenblöcke, die Komfortgeräusch-Parameter enthalten, definiert sind;
Erzeugen - anhand dieses Energiewertes - eines Geräuschschätzungswertes, der das durchschnittliche Hintergrundgeräusch in dem empfangenen Signal repräsentiert;
Erzeugen eines hochpassgefilterten Signals durch Anlegen des empfangenen Signals an eines von mehreren Hochpassfiltern anhand des Geräuschschätzungswertes;
Erzeugen eines Komfortgeräuschs anhand des Geräuschschätzungswertes;
Bestimmen - anhand des Energiewertes und des Geräuschschätzungswertes -, ob das empfangene Signal eine Sprachkomponente enthält; und
Erzeugen - anhand des hochpassgefilterten Signals - eines verarbeiteten hochpassgefilterten Signals, wenn das empfangene Signal keine Sprachkomponente enthält.

2. Verfahren nach Anspruch 1, wobei die Differenz in den Grenzfrequenzen jedes der mehreren Hochpassfilter mindestens 100 Hz beträgt.

3. Verfahren nach Anspruch 1, wobei der Schritt des Erzeugens eines verarbeiteten hochpassgefilterten Signals folgende Schritte umfasst:

Dämpfen des hochpassgefilterten Signals; und
Einfügen des Komfortgeräuschs in das hochpassgefilterte Signal.

4. Verfahren nach Anspruch 3, wobei das Komfortgeräusch ein tiefpassgefiltertes weißes Rauschen umfasst, das anhand des Geräuschschätzungswertes skaliert wird.

5. Vorrichtung zum Verarbeiten eines empfangenen Signals, wobei das empfangene Signal eine Sprachkomponente und eine Geräuschkomponente umfasst, wobei die Vorrichtung folgendes umfasst:

Mittel (210) zum Erzeugen eines Energiewertes (e(m)), der die akustische Energie des empfangenen Signals repräsentiert;
Mittel (220) zum Erzeugen - anhand dieses Energiewertes - eines Geräuschschätzungswertes (N(m)), der das durchschnittliche Hintergrundgeräusch in dem empfangenen Signal repräsentiert; und
Mittel (280) zum Erzeugen eines hochpassgefilterten Signals durch Anlegen des empfangenen Signals an eines von mehreren Hochpassfiltern anhand des Geräuschschätzungswertes,

wobei das Mittel zum Erzeugen des Energiewertes und das Mittel zum Erzeugen des Hochpassfilters sich in der Empfangsvorrichtung befinden.

6. Vorrichtung nach Anspruch 5, wobei die Differenz in den Grenzfrequenzen jedes der mehreren Hochpassfilter mindestens 100 Hz beträgt.

7. Vorrichtung nach Anspruch 5, umfassend:

Mittel zum Bestimmen, ob das empfangene Signal eine Sprachkomponente enthält; und
Mittel zum Erzeugen eines verarbeiteten hochpassgefilterten Signals, wenn das empfangene Signal keine Sprachkomponente enthält.

8. Vorrichtung nach Anspruch 7, wobei das Mittel zum Erzeugen eines verarbeiteten hochpassgefilterten Signals folgendes umfasst:

Mittel (250) zum Erzeugen von Komfortgeräusch anhand des Geräuschschätzungswertes;
Mittel (270) zum Dämpfen des hochpassgefilterten Signals; und
Mittel (270) zum Einfügen des Komfortgeräuschs in das hochpassgefilterte Signal.

## Revendications

1. Procédé de traitement d'un signal reçu représentant de la parole et du bruit, ledit procédé comprenant les étapes consistant à :

générer une valeur d'énergie représentant l'énergie acoustique dudit signal reçu, où ledit signal reçu ne contient pas de trames spéciales non de parole, les trames spéciales non de parole étant définies comme des trames contenant des paramètres de bruit de confort ;
générer, en fonction de cette valeur d'énergie, une valeur d'estimation du bruit représentant le bruit de fond moyen dans ledit signal reçu ;
générer un signal filtré passe-haut par application dudit signal reçu à un filtre parmi une pluralité de filtres passe-haut en fonction de ladite valeur d'estimation du bruit ;
générer du bruit de confort en fonction de ladite valeur d'estimation du bruit ;
déterminer si ledit signal reçu contient une composante de parole en fonction de ladite valeur d'énergie et de ladite valeur d'estimation du bruit ; et
en fonction dudit signal filtré passe-haut, générer un signal filtré passe-haut traité si ledit signal reçu ne contient pas de composante de parole.

2. Procédé selon la revendication 1, dans lequel la différence des fréquences de coupure de chaque filtre parmi ladite pluralité de filtres passe-haut est d'au moins 100 Hz.

3. Procédé selon la revendication 1, dans lequel ladite étape de génération d'un signal filtré passe-haut traité comprend les étapes consistant à :

atténuer ledit signal filtré passe-haut ; et
insérer ledit bruit de confort dans ledit signal filtré passe-haut.

**4.** Procédé selon la revendication 3, dans lequel ledit bruit de confort comprend du bruit blanc filtré passe-bas mis à l'échelle en fonction de ladite valeur d'estimation du bruit.

**5.** Dispositif de traitement d'un signal reçu, ledit signal reçu comprenant une composante de parole et une composante de bruit, ledit dispositif comprenant :

un moyen (210) pour générer une valeur d'énergie (e(m)) représentant l'énergie acoustique dudit signal reçu ;
un moyen (220) pour générer, en fonction de cette valeur d'énergie, une valeur d'estimation du bruit (N(m)) représentant le bruit de fond moyen dans ledit signal reçu ; et
un moyen (280) pour générer un signal filtré passe-haut par application dudit signal reçu à un filtre parmi une pluralité de filtres passe-haut en fonction de ladite valeur d'estimation du bruit ;

dans lequel ledit moyen pour générer une valeur d'énergie et ledit moyen pour générer un signal filtré passe-haut sont contenus dans ledit dispositif de réception.

**6.** Dispositif selon la revendication 5, dans lequel la différence des fréquences de coupure de chaque filtre parmi ladite pluralité de filtres passe-haut est d'au moins 100 Hz.

**7.** Dispositif selon la revendication 5, comprenant :

un moyen pour déterminer si ledit signal reçu contient une composante de parole ; et
un moyen pour générer un signal filtré passe-haut traité si ledit signal reçu ne contient pas de composante de parole.

**8.** Dispositif selon la revendication 7, dans lequel ledit moyen pour générer un signal filtré passe-haut traité comprend :

un moyen (250) pour générer du bruit de confort en fonction de ladite valeur d'estimation du bruit ;
un moyen (270) pour atténuer ledit signal filtré passe-haut ; et
un moyen (270) pour insérer ledit bruit de confort dans ledit signal filtré passe-haut.

FIG. 1

**FIG. 2**

EP 1 017 042 B1

FIG. 3

**FIG. 4**

EP 1 017 042 B1

EP 1 017 042 B1

BEGIN

505 — e[m] < N[m] + Tdetect ? — **No** → Ncnt = 0 — 525

↓ Yes

510 — Ncnt = Ncnt + 1

515 — Ncnt ≥ Ncntthresh ? — **No** → v[m] = 1 — 520

↓ Yes

530 — v[m] = 0

END

**FIG. 5**

16

FIG. 6